# EUROPÄISCHE PATENTSCHRIFT

(11) **EP 4 046 744 B1**
(45) Veröffentlichungstag und Bekanntmachung des Hinweises auf die Patenterteilung: **25.12.2024**
(21) Anmeldenummer: 22158058.2
(22) Anmeldetag: 22.02.2022
(51) Int. Cl.: B23Q 1/00, B23Q 1/52, B23Q 17/00, G01L 5/00

(54) **TRÄGERVORRICHTUNG SOWIE VERFAHREN ZUM BETRIEB EINER TRÄGERVORRICHTUNG**
HOLDER DEVICE AND METHOD FOR OPERATING SAME
DISPOSITIF PORTEUR, AINSI QUE PROCÉDÉ DE FONCTIONNEMENT D'UN DISPOSITIF PORTEUR

(30) Priorität: 23.02.2021 DE 102021104311
(43) Veröffentlichungstag der Anmeldung: 24.08.2022
(73) Patentinhaber: Klaus-Dieter Klement Verwaltungs GmbH, 06667 Weißenfels (DE)
(72) Erfinder: Klement, Timo, 52428 Jülich (DE)
(74) Vertreter: Andrejewski - Honke Patent- und Rechtsanwälte Partnerschaft mbB

(56) Entgegenhaltungen:
- EP-A1- 3 391 991
- WO-A1-2021/018408
- JP-A- 2008 105 122

## Beschreibung

Die vorliegende Erfindung betrifft eine Trägervorrichtung für eine spanabhebende Bearbeitungsmaschine mit einem Grundkörper und zumindest einer an dem Grundkörper angeordneten Spannvorrichtung zur Befestigung einer Bearbeitungseinheit, wobei die zumindest eine Spannvorrichtung und/oder der Grundkörper entlang einer in eine erste Richtung verlaufenden Drehachse drehbar ausgebildet ist, wobei die zumindest eine Spannvorrichtung eine Spannelementanordnung aufweist, die dazu eingerichtet ist, in die Bearbeitungseinheit in einem Befestigungszustand durch Bewegen von Spannelementen in eine senkrecht zur Drehachse verlaufende Richtung zumindest teilweise einzugreifen.

Derartige Trägervorrichtungen können grundsätzlich unterschiedlich ausgebildet sein und für verschiedene Einsatzzwecke innerhalb einer spanabhebenden Bearbeitungsmaschine eingesetzt werden. So ist es beispielsweise möglich, dass es sich bei der Bearbeitungseinheit um ein Werkzeug z.B. einen Bohrer oder einen Fräser handelt, welcher über die zumindest eine Spannvorrichtung an dem Grundkörper befestigt wird. In einem solchen Fall ist die Spannvorrichtung üblicherweise selbst drehbar ausgebildet, um so eine spanabhebende Bearbeitung infolge der Rotation des Werkzeuges zu ermöglichen.

Alternativ kann es sich bei der Bearbeitungseinheit aber auch um ein Werkstück handeln, welches entweder unmittelbar oder über eine zusätzliche Palette in die Spannvorrichtung eingreift und sodann über diese an dem Grundkörper fixiert wird. Der Einsatz einer Palette als Bearbeitungseinheit ist in diesem Zusammenhang besonders sinnvoll, da die Spannvorrichtung durch die Spannelementanordnung eine vorgegebene Klemmgeometrie aufweist, die üblicherweise ein entsprechendes Gegenstück an der Bearbeitungseinheit erfordert. Die Spannelementanordnung ist hierbei so ausgebildet, dass diese mehrere entlang eines Kreisumfangs angeordnete Spannelemente aufweist, welche im Zuge einer Fixierung radial nach innen gefahren wären und sodann in einen Abschnitt der Bearbeitungseinheit eingreifen und hierdurch fixieren. Somit ist also bei der Bearbeitungseinheit ein bolzenförmiger Abschnitt erforderlich, der in die Öffnung zwischen den Spannelementen eingeführt werden kann und welcher in dem bolzenförmigen Abschnitt eine Vertiefung bzw. Umfangsnut aufweist, in die die Spannelemente sodann im Befestigungszustand eingreifen. Eine solche Ausgestaltung ist bei vorgefertigten Paletten wesentlich einfacher zu realisieren als unmittelbar an dem Werkstück, sodass das Werkstück üblicherweise zunächst auf einer Palette eingespannt wird und sodann zusammen mit der Palette über die zumindest eine Spannvorrichtung an dem Grundkörper fixiert wird. Im Rahmen der Erfindung bildet bei einer solchen Ausgestaltung dann die Palette zusammen mit dem zu bearbeiteten Werkstück die Bearbeitungseinheit.

Darüber hinaus ist in einem solchen Falle üblicherweise nicht die Spannvorrichtung selbst sondern vielmehr der Grundkörper drehbar ausgebildet, während die Spannvorrichtung in dem Grundkörper nicht drehbar fixiert ist. Eine solche Ausgestaltung wird daher auch als Drehtisch bezeichnet, wobei durch die Drehung des Grundkörpers das Werkstück innerhalb der spanabhebenden Bearbeitungsmaschine positioniert werden kann.

Derartige Trägervorrichtungen sind grundsätzlich aus dem Stand der Technik bekannt. So beschreibt beispielsweise die EP 2 301 712 B1 eine spanabhebende Bearbeitungsmaschine mit einem Werkstückträger und einer Werkzeugaufnahme, wobei sowohl der Werkstückträger als auch die Werkzeugaufnahme eine Trägervorrichtung bilden, an der entweder ein Werkzeug oder ein Werkstück im Sinne einer Bearbeitungseinheit befestigt werden können. Der Werkzeugträger ist in diesem Zusammenhang als ein Dreh-Schwenktisch ausgebildet, bei dem nicht nur das Werkstück selbst um eine Drehachse rotiert werden kann. Vielmehr ist auch der Grundkörper gegenüber einer horizontalen Achse verschwenkbar, wodurch die Positionierung des Werkstückes in einem größeren Maße beeinflusst werden kann.

Gattungsgemäße Trägervorrichtungen werden beispielsweise auch von der Firma CyTec Zylindertechnik GmbH unter dem Produktnamen CyTurn vertrieben. Es handelt sich hierbei um sogenannte Rundtische, welche entweder als klassischer Drehtisch oder aber auch als Dreh-Schwenktisch ausgebildet sind. Demnach können diese Rundtische entlang einer Drehachse rotiert werden, wobei insgesamt vier Spannvorrichtungen in Umfangsrichtung hintereinander angeordnet sind. Derartige Spannvorrichtungen werden auch als Nullpunktspannsystem bezeichnet und dienen der Fixierung eines Werkstückes bzw. einer Palette mit einem Werkstück. Die Spannvorrichtungen sind hierbei üblicherweise hydraulisch oder pneumatisch antreibbar, wobei das Prinzip einer derartigen Spannvorrichtung z.B. in der EP 0 219 594 B1 beschrieben wird. Demnach wird ein Bolzen in eine Aufnahmeöffnung der Spannvorrichtung eingeführt und sodann eine Schieberhülse durch Beaufschlagung von Druck parallel zum Bolzen verfahren, wodurch zugleich Spannelemente radial nach innen gedrückt werden und hierdurch den Bolzen spannend verriegeln.

Bei derartigen Trägervorrichtungen ist es üblich, dass sich während des Zerspanungsprozesses das Gewicht der Bearbeitungseinheit ändert. Dies ist umso entscheidender, wenn es sich bei dem Bearbeitungsstück um ein Werkstück handelt, welches direkt dem Zerspanungsprozess unterliegt. Von daher sind sowohl das Gewicht als auch die Gewichtsänderung relevante Größen, welche für unterschiedliche Arbeitsschritte von besonderer Bedeutung sind. So bedarf es beispielsweise einem leistungsstarken aber zugleich auch präzise laufenden Antriebsmotor, um beispielsweise ein entsprechend schweres Werkstück auf einem Drehtisch drehen bzw. positionieren zu können. Da entsprechende Antriebe üblicherweise als Elektromotor ausgebildet sind, ist diese zwecks Motorsteuerung eine Kennlinie zugeordnet, welche anhand von Erfahrungswerten und anhand des ursprünglichen Gewichts bestimmt wurde. Durch die Gewichtsänderung im Zuge des Betriebes kann jedoch diese Kennlinie nicht exakt angepasst werden, da die hierfür erforderliche Steuereinheit keine unmittelbare Rückmeldung über einen solchen Gewichtsverlust erhält.

Aus der WO 2021/01 8408, die die Basis für den Oberbegriff des Anspruchs 1 bildet, ist es ferner bekannt, Sensoren einzusetzen, welche die Spannkraft zwischen einer Bearbeitungseinheit und der Spannvorrichtung zu ermitteln.

Der vorliegenden Erfindung liegt die Aufgabe zugrunde, eine Trägervorrichtung anzugeben, welche sich gegenüber den bislang bekannten Trägervorrichtungen durch ein effektiveres und genaueres Arbeitsverhalten auszeichnet.

Diese Aufgabe wird gelöst durch eine Trägervorrichtung gemäß dem Patentanspruch 1, einer Bearbeitungsmaschine gemäß Patentanspruch 11 sowie einem Verfahren zum Betrieb einer erfindungsgemäßen Trägervorrichtung gemäß dem Patentanspruch 12.

Demnach ist vorgesehen, dass der zumindest einen Spannvorrichtung ein Kraftsensor zugeordnet ist, der ausgebildet ist, eine von der Bearbeitungseinheit auf die zumindest eine Spannvorrichtung einwirkende Kraft zu erfassen. Bei dieser Kraft handelt es sich um die Gewichtskraft oder um eine Gewichtskraftkomponente einer eingespannten Bearbeitungseinheit, wobei sich die Gewichtskraftkomponente anhand der Ausrichtung der Spannvorrichtung bzw. des Grundkörpers ergibt.

Der Kraftsensor selbst kann grundsätzlich auf verschiedene Art und Weise ausgebildet sein und ist unabhängig von der Ausgestaltungsweise außerhalb der Spannelementanordnung angeordnet. Der Kraftsensor ist bevorzugt als piezoelektrischer Kraftsensor ausgebildet. Das Herzstück eines solchen Sensors bildet dann einen piezoelektrischen Kristall z.B. Quarzkristall. Ein solcher piezoelektrischer Kristall gibt unter Krafteinwirkung eine Ladung ab, welche proportional zu der Kraft ist, die auf den Kristall einwirkt. Über eine entsprechende Elektronik kann dann die Ladung gemessen und die einwirkende Kraft bestimmt werden. Alternativ ist es auch möglich, dass der Kraftsensor als induktiver Kraftsensor ausgebildet ist. Darüber hinaus kann die Kraft auch über sogenannte Dehnungssensoren bestimmt werden. Sofern der Kraftsensor als Dehnungssensor ausgebildet ist, erfolgt mithilfe von Dehnmessstreifen eine Bestimmung der Dehnung. Über die Elastizität des sich dehnenden Materials kann sodann auf die Krafteinwirkung geschlossen werden. Des Weiteren ist es auch möglich, den Kraftsensor als einen federbelasteten Sensor auszubilden, sodass dann über eine Verformung und über die Kenntnis der Federkonstante auf die Krafteinwirkung geschlossen werden kann.

Gemäß einer bevorzugten Ausgestaltung der Erfindung ist der Kraftsensor zumindest zur Erfassung einer parallel zur Drehachse wirkenden Kraft ausgebildet. Eine solche Ausgestaltung ist insbesondere dann sinnvoll, wenn der Grundkörper vor oder während des Zerspanungsprozesses im Wesentlichen horizontal angeordnet ist oder in eine horizontale Position verschwenkt werden kann, sodass dann entsprechend die Drehachse schräg oder parallel zur Gewichtskraft der in der zumindest einen Spannvorrichtung angeordneten Bearbeitungseinheit angeordnet ist. Im Falle einer parallel zur Gewichtskraft angeordneten Bearbeitungseinheit kann sodann direkt über den zumindest einen Kraftsensor das Gewicht der Bearbeitungseinheit ermittelt werden. Sofern die Drehachse schräg gestellt ist bzw. gestellt werden kann, weist die Trägervorrichtung bevorzugt zusätzlich einen Winkelmesser auf, über den die Schrägstellung des Grundkörpers und damit auch der Drehachse ermittelt werden kann. Auf Basis der von dem zumindest einen Kraftsensor und der von dem Winkelmesser ermittelten Daten kann dann wiederum auf das Gewicht der Bearbeitungseinheit geschlossen werden.

Wenngleich bevorzugt zumindest eine parallel zur Drehachse wirkende Kraft über den Kraftsensor detektiert werden soll, so kann in einer Weiterbildung der Erfindung der Kraftsensor auch Kräfte entlang mehrerer Achsen detektieren. So ist es beispielsweise denkbar, dass der Kraftsensor auch zur Detektion von senkrecht zur Drehachse wirkenden Kräften ausgebildet ist und insbesondere in alle Raumrichtungen wirkende Kräfte detektieren kann. Hierdurch ist es möglich, dass auch bei einem Grundkörper mit einer senkrecht zur wirkenden Gewichtskraft angeordneten Drehachse eine Erfassung des Gewichts der Bearbeitungseinheit möglich ist. Darüber hinaus kann der Kraftsensor auch zur Erfassung von Momenten ausgebildet sein, sodass entsprechend auch Kippmomente aufgrund einer ungleichen Gewichtsbelastung von dem zumindest einen Kraftsensor erfasst werden können. Im Rahmen der Erfindung ist daher auch im Hinblick auf Momente von Kräften die Rede.

Um mithilfe des zumindest einen Kraftsensors die Gewichtskraft einer Bearbeitungseinheit unmittelbar an der zumindest einen Spannvorrichtung erfassen zu können, eignen sich grundsätzlich unterschiedliche Ausgestaltungsformen. Gemäß einer ersten Alternative ist die zumindest eine Spannvorrichtung ausschließlich über den zumindest einen Kraftsensor an dem Grundkörper abgestützt. Demnach bildet der zumindest eine Kraftsensor den einzig möglichen Pfad, über den eine von der Bearbeitungseinheit auf die Spannvorrichtung wirkende Gewichtskraft auf den Grundkörper übertragen werden kann. Da die Spannvorrichtung nur über den Kraftsensor an dem Grundkörper befestigt ist, kann demnach eine Gewichtskraft nicht unmittelbar von der Spannvorrichtung auf den Grundkörper wirken. Eine solche Ausgestaltung hat den Vorteil, dass die von der Spannvorrichtung auf die Bearbeitungseinheit einwirkende Spannkraft keinen Einfluss auf die Messung mit dem zumindest einen Kraftsensor hat. Unabhängig davon, ob die Spannelementanordnung in einem Befestigungszustand oder in einem gelösten Zustand ist, wird stets die tatsächlich von der Bearbeitungseinheit auf die Spannvorrichtung einwirkende Kraft gemessen. Hierdurch ist es möglich, auch im laufenden Betrieb bzw. unabhängig von der Spannelementanordnung kontinuierliche Messungen durchzuführen bzw. Messungen zu verschiedenen Zeitpunkten durchzuführen, ohne dass zunächst die Spannelementanordnung gelöst werden muss. Die Abstützung erfolgt bevorzugt parallel zur ersten Richtung bzw. zur Drehachse.

Alternativ ist es aber auch möglich, den Kraftsensor nicht zwischen der Spannvorrichtung und dem Grundkörper sondern zwischen der Spannvorrichtung und der Bearbeitungseinheit anzuordnen. Gemäß einer solchen Ausgestaltung ist der zumindest eine Kraftsensor dann in einem oberen der Bearbeitungseinheit zugewandten Abschnitt der zumindest einen Spannvorrichtung derart angeordnet, dass sich in einem gelösten Zustand der Spannelementanordnung die Bearbeitungseinheit ausschließlich über den Kraftsensor an der zumindest einen Spannvorrichtung abstützt. Da sich nunmehr der Kraftsensor zwischen der Bearbeitungseinheit und der Spannvorrichtung befindet, wird nunmehr in einem Befestigungszustand nicht nur die von der Bearbeitungseinheit einwirkende Kraft sondern vielmehr auch die von der Spannelementanordnung einwirkende Klemmkraft gemessen, sodass die Bestimmungen der Gewichtskraft nur in einem gelösten Zustand erfolgen kann. Gemäß einer solchen Ausgestaltung muss folglich zwischen zwei aufeinander folgenden Bearbeitungsschritten die Spannelementanordnung gelöst werden. Erst dann kann eine Messung bzw. eine Bestimmung der Gewichtskraft erfolgen. Im Anschluss wird die Spannelementanordnung wieder in einen Befestigungszustand überführt und der nächste Bearbeitungsschritt kann beginnen. Bei dem oberen der Bearbeitungseinheit zugewandten Abschnitt kann es sich um einen Gehäuseabschnitt der Spannvorrichtung handeln, der einerseits die Einführung eines Abschnittes der Bearbeitungseinheit und zugleich die Aufnahme des Kraftsensors ermöglicht. Unabhängig von der konkreten Ausgestaltung der Erfindung wird der Kraftsensor bevorzugt als Kraftmessdose bereitgestellt, die im Falle einer Anordnung an einem oberen Abschnitt der Spannvorrichtung zumindest eine zentrale Durchbrechung aufweist, durch die der zu befestigende Abschnitt der Bearbeitungseinheit durchgeführt werden kann.

Wenn gleich die Trägervorrichtung in verschiedenster Art und Weise ausgebildet sein kann und sowohl der Aufnahme eines Werkzeuges als auch eines Werkstückes dienen kann, so ist diese bevorzugt in Form eines Drehtisches ausgebildet. Gemäß einer solchen Ausgestaltung ist der Grundkörper als Aufnahmeplatte ausgebildet, welche gegenüber einem Montagekörper drehbar angeordnet ist. Die zumindest eine Spannvorrichtung ist dann an der Aufnahmeplatte in einer nicht drehbaren Art und Weise fixiert. Entsprechend stellt der Montagekörper den Bereich dar, über den die Trägervorrichtung in einer Bearbeitungsmaschine montiert bzw. befestigt wird. Die Aufnahmeplatte bildet dann den eigentlichen Drehtisch, an dem die zumindest eine Spannvorrichtung auf einer der zuvor beschriebenen Art und Weisen befestigt ist. Mithilfe der drehbaren Aufnahmeplatte kann das Werkstück bzw. das auf einer Palette befestigte Werkstück gedreht und positioniert werden. Bevorzugt kann mithilfe des Drehtisches aber nicht nur eine Positionierung erfolgen. Vielmehr ist es mithilfe der Drehung auch möglich, selbst die für die Spanabhebung erforderliche Rotation zu erzeugen. Hierfür wird ein schnell drehender Antriebsmotor verwendet, der eine ausreichend hohe Drehzahl und ein ausreichend hohes Drehmoment erzeugt, damit durch Anlegen eines Werkzeuges ein spanabhebender Prozess durchgeführt werden kann.

Bei einer solchen Ausgestaltung weist die Aufnahmeplatte bevorzugt zumindest eine Kavität auf, in der die zumindest eine Spannvorrichtung angeordnet ist, wobei der obere Abschnitt der Spannvorrichtung gegenüber einer äußeren der Bearbeitungseinheit zugewandten Fläche der Aufnahmeplatte vorsteht. Hierdurch wird sichergestellt, dass die Bearbeitungseinheit ausschließlich an der zumindest einen Spannvorrichtung anliegt, sodass die Gewichtskraft vollständig über die zumindest eine Spannvorrichtung an den Grundkörper übertragen wird. Entsprechend weist die Spannvorrichtung dann eine ausreichend große Anlagefläche auf, sodass die einwirkende Kraft der Bearbeitungseinheit über eine möglichst große Fläche abgeleitet werden kann.

Gemäß einer Weiterbildung sind zumindest drei Spannvorrichtungen an der drehbaren Aufnahmeplatte angeordnet, wobei jeder der Spannvorrichtung ein Kraftsensor zugeordnet ist. Demnach kann eine Kraftmessung an zumindest drei separaten Spannvorrichtungen erfolgen, die alle in gleicher Art und Weise an dem Grundkörper befestigt sind. Durch die Verwendung von drei unterschiedlichen Spannvorrichtungen ist es möglich, die Bearbeitungseinheit an zumindest drei Positionen auf dem Grundkörper zu fixieren. Dies ist insbesondere bei großen und/oder schweren Bearbeitungseinheiten von besonderem Vorteil. Die Erfassung der Gewichtskraft kann dann über eine Messung an allen drei Kraftsensoren gemeinsam erfolgen. Alternativ ist es aber auch möglich anstelle von nur einer Bearbeitungseinheit mehrere Bearbeitungseinheiten jeweils an einer der Spannvorrichtungen klemmend zu fixieren, wobei da entsprechend mit den jeweiligen Kraftsensoren jeweils das Gewicht von nur einer Bearbeitungseinheit gemessen wird. Bevorzugt sind aber nicht nur drei sondern zumindest oder exakt vier Spannvorrichtungen vorgesehen.

Gemäß einer Weiterbildung der Erfindung sind die Spannvorrichtungen in Umfangsrichtung hintereinander angeordnet. Mit Umfangsrichtung ist im Rahmen der Erfindung eine Richtung gemeint, die bezüglich eines Drehtisches bzw. bei einer Ausgestaltung mit drehbarer Aufnahmeplatte senkrecht zur ersten Richtung bzw. der Drehachse verläuft, wobei die Drehachse die Mittelachse einer solchen Umfangsrichtung darstellt. Sofern die Spannvorrichtungen dann entlang der Umfangsrichtung hintereinander angeordnet sind, weisen diese bevorzugt den gleichen Abstand in radialer Richtung zur Drehachse auf, sodass sich bezüglich der geometrischen Ausgestaltung eine symmetrische Anordnung ergibt. Dies bedeutet auch, dass die Abstände zwischen zwei aufeinanderfolgenden Spannvorrichtungen in Umfangsrichtung konstant sind und demnach die Spannvorrichtungen eine gleichmäßige Teilung des Umfangs definieren. Sofern drei Spannvorrichtungen vorgesehen sind, sind diese in Umfangsrichtung über einen Winkelabstand von 120° voneinander beabstandet. Besonders bevorzugt sind jedoch vier separate Spannvorrichtungen an dem Grundkörper vorgesehen, sodass diese in Umfangsrichtung in einem Winkelabstand von 90° zueinander beabstandet sind.

Gemäß einer Weiterbildung der Erfindung ist dem Grundkörper und/oder der zumindest einen Spannvorrichtung jeweils ein Elektromotor als Antriebsmotor zugeordnet. Hierbei handelt es sich bevorzugt um einen sogenannten Torque-Motor. Bei Torque-Motoren handelt es sich um bürstenlose Permanentmagnet-Synchronmotoren, die bei vergleichsweise kleiner Baugröße und bei mittlerer Geschwindigkeit ein hohes Drehmoment erreichen. Insbesondere wird ein hohes Maß an Positioniergenauigkeit erreicht, sodass sich derartige Motoren insbesondere für den Werkzeugmaschinenbau eignen. Darüber hinaus kann durch die Einbindung von elektrisch betriebenen Antriebsmotoren die Kennlinie speziell an die erforderlichen Lasten angepasst werden, sodass beispielsweise bei einer besonders schweren Bearbeitungseinheit zu Beginn der Drehung ein hohes Drehmoment aufgebracht wird, während dies bei einer vergleichsweise kleinen Last geringer ausfallen kann. Hierdurch wird einerseits eine höhere Effizienz im Hinblick auf die zu erbringende Leistung als auch im Hinblick auf die erforderliche Energie erreicht.

Ausgehend von einer solchen Ausgestaltung ist es gemäß einer besonders bevorzugten Ausgestaltung vorgesehen, dass eine Steuereinheit vorgesehen ist, die dazu eingerichtet ist, die von dem zumindest einen Kraftsensor ermittelte Kraft bzw. Gewichtskraft zu erfassen, auf Basis der ermittelten Kraft zumindest eine charakteristische Eigenschaft der Bearbeitungseinheit zu ermitteln und anhand der charakteristischen Eigenschaft zumindest einen Antriebsparameter für den zumindest einen Antriebsmotor zu bestimmen. Auf Basis des zumindest einen Antriebsparameters wird dann der Antriebsmotor der Trägereinheit und/oder der zumindest einen Spannvorrichtung gesteuert und/oder geregelt. Bei der charakteristischen Eigenschaft handelt es sich insbesondere um das Gewicht der Bearbeitungseinheit. Gerade bei Verwendung von mehreren Spannvorrichtungen oder Kraftsensoren, die auch Kippmomente erfassen können, kann es sich bei der charakteristischen Eigenschaft auch um eine Gewichtsverteilung bzw. um eine Unwucht handeln.

Bevorzugt weist die Steuereinheit eine Speichereinheit auf, wobei die in der Speichereinheit hinterlegten Daten einen Abgleich zwischen den charakteristischen Eigenschaften und den Antriebsparametern ermöglichen.

Gegenstand der Erfindung ist ferner eine Bearbeitungsmaschine z.B. eine Fräsmaschine, eine Drehmaschine oder eine Fräs-/Drehmaschine gemäß Patentanspruch 11 mit einer erfindungsgemäßen Trägervorrichtung zur Aufnahme eines Werkstückes bzw. zur Aufnahme einer Palette mit einem Werkstück und einem Bearbeitungskopf, der dazu ausgebildet ist, das Werkstück spanabhebend zu bearbeiten. Entsprechend ist der Bearbeitungskopf ein Drehkopf, ein Fräskopf oder ein Dreh-/Fräskopf.

Gegenstand der Erfindung ist ferner ein Verfahren zum Betrieb einer erfindungsgemäßen Trägervorrichtung gemäß Patentanspruch 12, wobei der zumindest eine Kraftsensor eine von der Bearbeitungseinheit auf die zumindest eine Spannvorrichtung einwirkende Kraft bzw. Kraftkomponente erfasst und an die Steuereinheit übermittelt, wobei die Steuereinheit auf Basis der erfassten Kraft charakteristische Eigenschaften der Bearbeitungseinheit ermittelt und anhand der charakteristischen Eigenschaften zumindest einen Antriebsparameter bestimmt und wobei die Steuereinheit auf Basis des zumindest einen Antriebsparameters den Antriebsmotor der Trägerheit und/oder der zumindest einen Spannvorrichtung steuert und/oder regelt.

Sämtliche zuvor im Zusammenhang mit der Trägervorrichtung genannten Merkmale gelten selbstverständlich auch für die Bearbeitungsmaschine bzw. für das Verfahren zum Betrieb der erfindungsgemäßen Trägervorrichtung. Gemäß dem Verfahren wird also nunmehr die Messung der von der Bearbeitungseinheit auf die Kraftsensoren wirkende Kraft bzw. Kraftkomponente dazu genutzt, um charakteristische Eigenschaften der Bearbeitungseinheit zu ermitteln. Hierbei handelt es sich, wie bereits zuvor erläutert, insbesondere um das Gewicht oder die Gewichtsverteilung bzw. um Umwuchten der Bearbeitungseinheit. Darüber hinaus können selbstverständlich auch weitere Parameter mit in die Bestimmung der charakteristischen Eigenschaften einfließen. Beispielsweise kann mithilfe eines Winkelmessers die Lage der Bearbeitungseinheit erfasst und die hieraus gewonnenen Daten in Kombination mit den Daten der Messsensoren zur Bestimmung z.B. des Gewichts genutzt werden.

Entsprechend ermittelt die Steuereinheit bevorzugt auf Basis der erfassten Kräfte das Gewicht der Bearbeitungseinheit als charakteristische Größe. Alternativ oder ergänzend sind mehrere Spannvorrichtungen in Umfangsrichtung hintereinander angeordnet und jeder dieser Spannvorrichtungen ist jeweils ein Kraftsensor zugeordnet, wobei die Bearbeitungseinheit über die Spannvorrichtungen auf dem Grundkörper aufliegt und die Steuereinheit auf Basis der erfassten Kräfte die Gewichtsverteilung der Bearbeitungseinheit als charakteristische Größe ermittelt.

Selbstverständlich kann die Gewichtsverteilung auch anhand von nur einem Kraftsensor bestimmt werden, wobei dann der Kraftsensor zur Erfassung von Momenten ausgebildet und eingerichtet ist.

Die Messung und/oder die Bestimmung der Antriebsparameter kann entweder kontinuierlich oder aber auch diskontinuierlich zwischen zwei Arbeitsvorgängen ermittelt werden. Bei einer diskontinuierlichen Messung kann darüber hinaus zwischen zwei aufeinander folgenden Bearbeitungsschritten die Spannelementanordnung der zumindest einen Spannvorrichtung gelöst werden, sodass entsprechend auch bei einer Anordnung des Kraftsensors zwischen der Bearbeitungseinheit und der Spannvorrichtung eine Bestimmung des Gewichts der Bearbeitungseinheit auf Basis der Messung des zumindest einen Kraftsensors erfolgen kann.

Unabhängig von der konkreten Ausgestaltung ist es demnach möglich, zu unterschiedlichen Zeitpunkten des Zerspanungsprozesses das Gewicht bzw. die Gewichtsverteilung der Bearbeitungseinheit zu ermitteln und auf Basis dieser charakteristischen Eigenschaften die Antriebsparameter des Antriebsmotors anzupassen. Hierdurch ist eine sehr gezielte Steuerung bzw. Regelung des Antriebsmotors möglich.

Im Folgenden wird die Erfindung anhand eines Ausführungsbeispiels näher erläutert. Es zeigen:
- Fig. 1, 2: eine erfindungsgemäße als Drehtisch ausgebildete Trägervorrichtung,
- Fig. 3: einen Querschnitt durch die Trägervorrichtung gemäß der Fig. 1,
- Fig. 4: eine detaillierte Ansicht einer in der Trägervorrichtung verbauten Spannvorrichtung und
- Fig. 5: eine isolierte Darstellung einer Spannvorrichtung mit einem Kraftsensor.

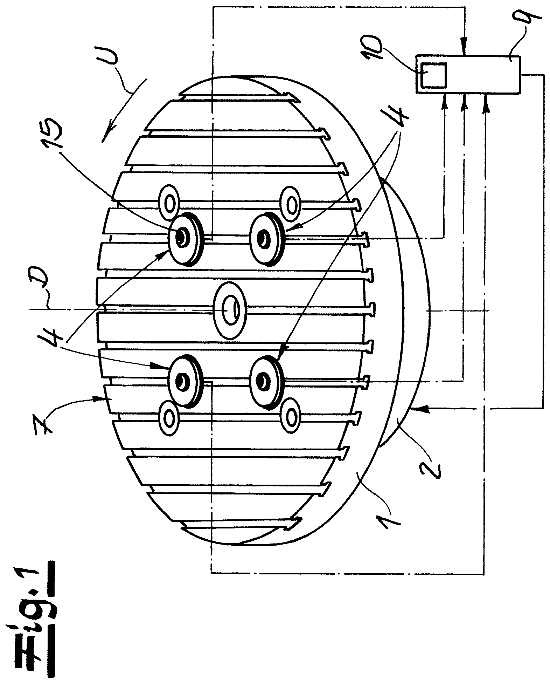

Die Fig. 1 zeigt eine als Drehtisch ausgebildete Trägervorrichtung mit einem als Aufnahmeplatte ausgebildeten Grundkörper 1, der drehbar auf einem Montagekörper 2 angeordnet ist. Der dargestellte Drehtisch ist hierbei so ausgebildet, dass der Grundkörper 1 in einem bestimmungsgemäßen Montagezustand horizontal ausgerichtet ist, sodass entsprechend eine Bearbeitungseinheit 3 flach auf dem Grundkörper 1 aufliegt.

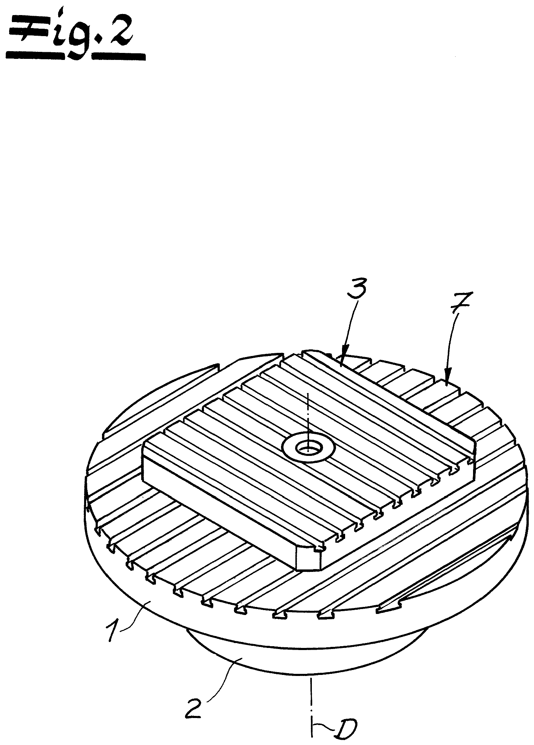

Die Bearbeitungseinheit 3 ist in diesem Zusammenhang lediglich in der Fig. 2 dargestellt, wobei es sich in diesem Fall um eine Palette handelt, auf der über einen zusätzlichen Klemmmechanismus ein zu zerspanendes Werkstück befestigt werden kann. Aufgrund der besseren Darstellung wurde in den übrigen Figuren auf eine Darstellung der Bearbeitungseinheit 3 verzichtet.

Um die Bearbeitungseinheit 3 auf dem Grundkörper 1 zu befestigen, sind insgesamt vier Spannvorrichtungen 4 vorgesehen, wobei jede dieser vier Spannvorrichtungen 4 identisch ausgebildet ist. Deutlich zu erkennen ist ferner, dass die vier Spannvorrichtungen 4 entlang der Umfangsrichtung U angeordnet sind und jeweils zwei aufeinanderfolgende Spannvorrichtungen 4 stets den gleichen Winkelabstand von 90° zueinander aufweisen. Hierdurch bildet sich eine symmetrische Ausgestaltung aus, sodass entsprechend eine gleichmäßige Belastung aller vier Spannvorrichtungen 4 erfolgt.

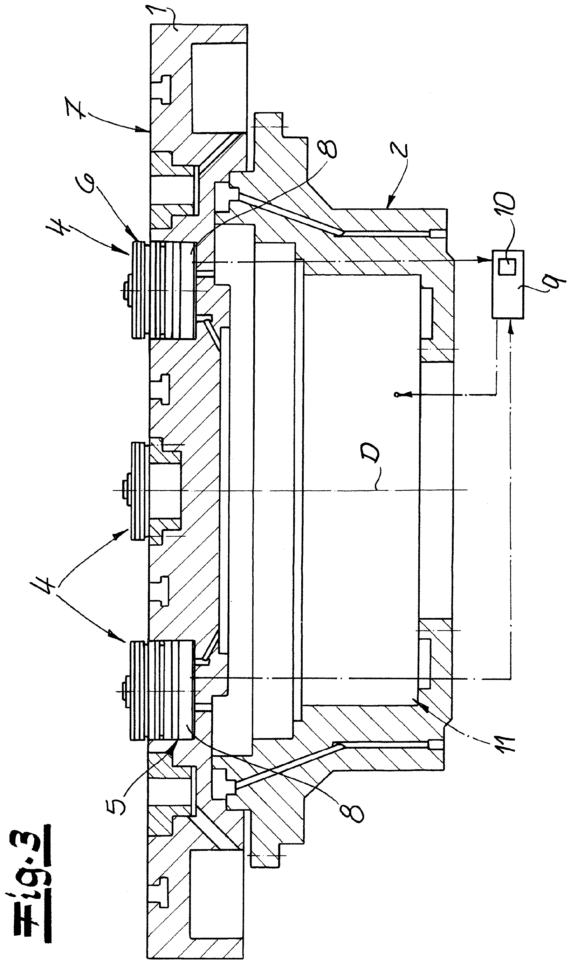

Insbesondere anhand einer vergleichenden Betrachtung mit der Fig. 3 wird deutlich, wie die vier Spannvorrichtungen 4 an dem Grundkörper 1 befestigt sind. Der Grundkörper 1 weist hierzu jeweils vier Kavitäten 5 auf, in denen die Spannvorrichtungen 4 eingesetzt sind, wobei jeweils ein oberer Abschnitt 6 gegenüber einer äußeren Fläche 7 des Grundkörpers 1 vorsteht. Zwischen dem Grundkörper 1 und den Spannvorrichtungen 4 ist ferner jeweils ein Kraftsensor 8 angeordnet, der dazu ausgebildet ist, eine von der Bearbeitungseinheit 3 auf die Spannvorrichtungen 4 einwirkende Kraft zu erfassen.

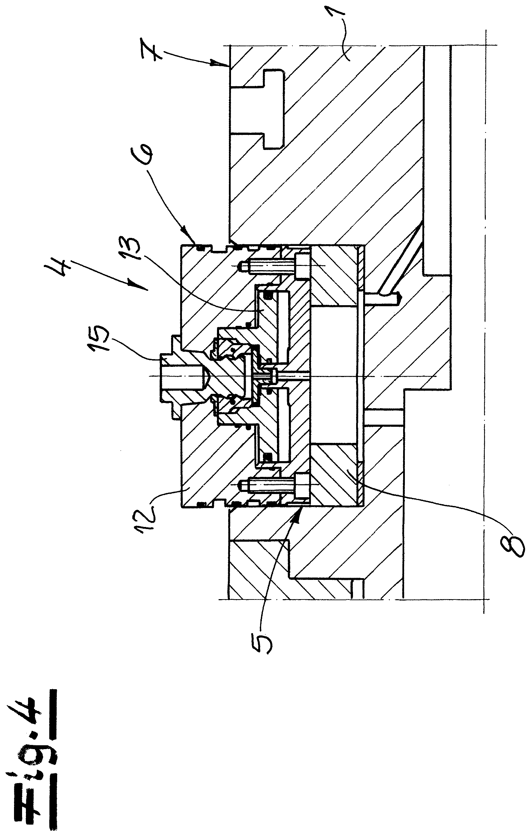

Insbesondere im Vergleich mit der Fig. 4 wird deutlich, dass die Kraftsensoren 8 als ringförmige Kraftmessdosen ausgebildet sind und die Spannvorrichtungen 4 ausschließlich über die Kraftsensoren 8 an dem Grundkörper 1 abgestützt sind.

Mithilfe der Kraftsensoren 8 ist es nunmehr möglich, unabhängig von dem Spannzustand der Spannvorrichtungen 4 eine parallel zur Drehachse D einwirkende Kraft zu erfassen. Durch die horizontale Anordnung des Grundkörpers 1 wirkt die Gewichtskraft der Bearbeitungseinheit 3 ebenfalls senkrecht zur Drehachse D, sodass mithilfe der vier Spannvorrichtungen 4 das Gewicht der Bearbeitungseinheit 3 ermittelt werden kann.

Die Trägervorrichtung weist gemäß den Fig. 1 und 3 eine Steuereinheit 9 mit einer Speichereinheit 10 auf, die dazu eingerichtet ist, die von den Kraftsensoren 4 ermittelte Kraft zu erfassen und auf Basis der ermittelten Kraft zumindest eine charakteristische Eigenschaft der Bearbeitungseinheit 3 zu ermitteln. Bei dieser charakteristischen Eigenschaft kann es sich einerseits um das Gewicht andererseits aber auch um die Gewichtsverteilung bzw. um mögliche Unwuchten handeln, welche aufgrund der vier an unterschiedlichen Positionen angeordneten Spannvorrichtungen 4 ermittelbar ist. Anhand dieser charakteristischen Eigenschaften kann sodann über die Speichereinheit 10 ein Abgleich mit relevanten Antriebsparametern erfolgen, wobei auf Basis dieser Antriebsparameter der Antriebsmotor 11 gesteuert bzw. geregelt wird. Dies kann kontinuierlich während des Spannungsprozesses erfolgen. Bevorzugt ist aber eine Ausgestaltung, bei der zwischen zwei aufeinanderfolgenden Bearbeitungsschritten eine Messung mittels der Kraftsensoren 4 und sodann eine Anpassung der Antriebsparameter erfolgt.

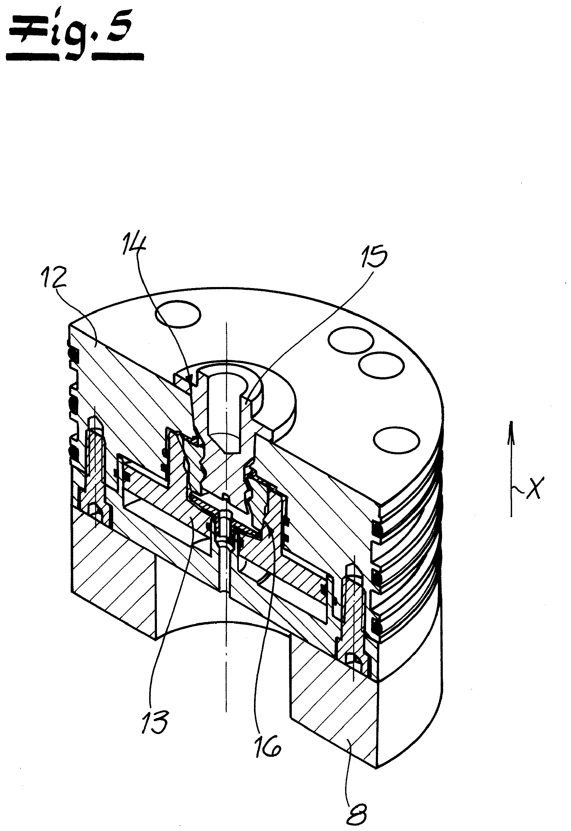

Die konkrete Ausgestaltung der Spannvorrichtungen kann insbesondere den Fig. 4 und 5 entnommen werden.

Die Spannvorrichtungen 4 sind im Wesentlichen rotationssymmetrisch ausgebildet und werden pneumatisch betätigt.

Die Spannvorrichtungen 4 weist ein Zylindergehäuse 12 mit einem Kolben 13 auf, der in Axialrichtung X verschiebbar ist. Die axiale Richtung X stellt im Rahmen der Trägervorrichtung die erste entlang der Drehachse D verlaufende Richtung dar. Am oberen Ende der Spannvorrichtung 4 ist eine kreisförmige Durchbrechung 14 vorgesehen, in die eine Zugstange 15 eingeführt werden kann. Diese Zugstange 15 kann dann entweder an einer Palette oder unmittelbar an einem Werkstück im Sinne einer Bearbeitungseinheit 3 befestigt werden. Durch Verfahren des Hubkolbens 13 werden die einzelnen Spannelemente der Spannelementanordnung 16 nach innen in einer senkrecht zur axialen Richtung X verlaufenden Richtung bewegt und greifen teilweise in eine ringförmige Nut bzw. in zwei ringförmige Nuten des Zugbolzens 15 ein.

Durch Verfahren des Hubkolbens 13 in eine entgegensetzt dazu verlaufende Richtung können die einzelnen Spannelemente der Spannelementanordnung 16 wieder nach außen gedrückt und der Zugbolzen 15 entnommen werden.

An einem unteren Abschnitt der Spannvorrichtung 4 ist ferner der Kraftsensor 5 angeordnet, über den die Spannvorrichtung 4 an dem Grundkörper 1 befestigt werden kann, sodass die Spannvorrichtung 4 ausschließlich über den Kraftsensor 5 an dem Grundkörper 1 abgestützt ist.

## Patentansprüche

1. Trägervorrichtung für eine spanabhebende Bearbeitungsmaschine mit einem Grundkörper (1) und zumindest einer an dem Grundkörper (1) angeordneten Spannvorrichtung (4) zur Befestigung einer Bearbeitungseinheit (3),
wobei die zumindest eine Spannvorrichtung (4) und/oder der Grundkörper (1) entlang einer in eine erste Richtung verlaufenden Drehachse (D) drehbar ausgebildet ist,
wobei die zumindest eine Spannvorrichtung (4) eine Spannelementanordnung (16) aufweist, die dazu eingerichtet ist, in die Bearbeitungseinheit (3) in einem Befestigungszustand durch Bewegen von Spannelementen in eine senkrecht zur Drehachse (D) verlaufende Richtung zumindest teilweise einzugreifen,
wobei der zumindest einen Spannvorrichtung (4) ein Kraftsensor (8) zugeordnet ist,
**dadurch gekennzeichnet, dass** der Kraftsensor (8) ausgebildet ist, eine von der Bearbeitungseinheit (3) auf die zumindest eine Spannvorrichtung (4) einwirkende Gewichtskraft oder Gewichtskraftkomponente zu erfassen.

2. Trägervorrichtung nach Anspruch 1, **dadurch gekennzeichnet, dass** der Kraftsensor (8) zumindest zur Erfassung einer parallel zur Drehachse (D) wirkenden Kraft ausgebildet ist.

3. Trägervorrichtung nach Anspruch 1 oder 2, **dadurch gekennzeichnet, dass** die zumindest eine Spannvorrichtung (4) ausschließlich über den zumindest einen Kraftsensor (8) an dem Grundkörper (1) abgestützt ist.

4. Trägervorrichtung nach Anspruch 1 oder 2, **dadurch gekennzeichnet, dass** der zumindest eine Kraftsensor (8) in einem oberen Abschnitt (6) der zumindest einen Spannvorrichtung (4) derart angeordnet ist, dass sich in einem gelösten Zustand der Spannelementanordnung (16) die Bearbeitungseinheit (3) ausschließlich über den Kraftsensor (8) an der zumindest einen Spannvorrichtung (4) abstützt.

5. Trägervorrichtung nach einem der Ansprüche 1 bis 4, **dadurch gekennzeichnet, dass** der Grundkörper (1) als Aufnahmeplatte ausgebildet ist und gegenüber einem Montagekörper (2) drehbar angeordnet ist, wobei die zumindest eine Spannvorrichtung (4) an der Aufnahmeplatte fixiert ist.

6. Trägervorrichtung nach Anspruch 5, **dadurch gekennzeichnet, dass** die Aufnahmeplatte zumindest eine Kavität (5) aufweist, in der die zumindest eine Spannvorrichtung (4) angeordnet ist, wobei der obere Abschnitt (6) der Spannvorrichtung (4) gegenüber einer äußeren Fläche (7) der Aufnahmeplatte vorsteht.

7. Trägervorrichtung nach Anspruch 5 oder 6, **dadurch gekennzeichnet, dass** zumindest drei Spannvorrichtungen (4) an der drehbaren Aufnahmeplatte angeordnet sind, wobei jeder der Spannvorrichtungen (4) ein Kraftsensor (8) zugeordnet ist.

8. Trägervorrichtung nach Anspruch 7, **dadurch gekennzeichnet, dass** die Spannvorrichtungen (4) in Umfangsrichtung (U) hintereinander angeordnet sind.

9. Trägervorrichtung nach einem der Ansprüche 1 bis 8, **dadurch gekennzeichnet, dass** dem Grundkörper (1) und/oder der zumindest einen Spannvorrichtungen (4) jeweils ein Elektromotor als Antriebsdrehmotor (11) zugeordnet ist.

10. Trägervorrichtung nach Anspruch 9, wobei eine Steuereinheit (9) vorgesehen ist, die dazu eingerichtet ist,
die von dem zumindest einen Kraftsensor (8) ermittelte Kraft zu erfassen,
auf Basis der ermittelten Kraft zumindest eine charakteristische Eigenschaft der Bearbeitungseinheit (3) zu ermitteln
und anhand der charakteristischen Eigenschaft zumindest einen Antriebsparameter für den zumindest einen Antriebsmotor (11) zu bestimmen,
und auf Basis des zumindest einen Antriebsparameters den einen Antriebsmotor (11) des Grundkörpers und/oder der zumindest einen Spannvorrichtung (4) zu steuern und/oder zu regeln.

11. Bearbeitungsmaschine mit einer Trägervorrichtung nach einem der Ansprüche 1 bis 10 und einem Bearbeitungskopf, der dazu ausgebildet ist das Werkstück spanabhebend zu bearbeiten.

12. Verfahren zum Betrieb einer Trägervorrichtung nach Anspruch 10,
wobei der zumindest eine Kraftsensor (8) eine von der Bearbeitungseinheit (3) auf die zumindest eine Spannvorrichtung (4) einwirkende Kraft erfasst und an die Steuereinheit (9) übermittelt,
wobei die Steuereinheit (9) auf Basis der erfassten Kraft charakteristische Eigenschaften der Bearbeitungseinheit (3) ermittelt und anhand der charakteristischen Eigenschaften zumindest einen Antriebsparameter bestimmt und
wobei die Steuereinheit (9) auf Basis des zumindest einen Antriebsparameters den Antriebsmotor (11) des Grundkörpers (1) und/oder der zumindest einen Spannvorrichtung (4) steuert und/oder regelt.

13. Verfahren nach Anspruch 12, wobei die Steuereinheit (9) auf Basis der erfassten Kräfte das Gewicht der Bearbeitungseinheit (3) als charakteristische Größe ermittelt.

14. Verfahren nach Anspruch 11 oder 12, wobei mehrere Spannvorrichtungen (4) in Umfangsrichtung (U) hintereinander angeordnet und jeder Spannvorrichtung (4) jeweils ein Kraftsensor (8) zugeordnet ist, wobei die Bearbeitungseinheit (3) über die Spannvorrichtungen (4) auf dem Grundkörper (1) aufliegt und die Steuereinheit (9) auf Basis der erfassten Kräfte die Gewichtsverteilung der Bearbeitungseinheit (3) als charakteristische Größe ermittelt.

## Claims

1. A carrier device for a cutting processing machine with a base body (1) and at least one clamping device (4) that is arranged on the base body (1) and serves for fastening a processing unit (3),
wherein the at least one clamping device (4) and/or the base body (1) is designed so as to be rotatable along a rotational axis (D) extending in a first direction,
wherein the at least one clamping device (4) has a clamping element arrangement (16) that is designed for at least partially engaging into the processing unit (3) in a fastening state by moving clamping elements in a direction extending perpendicular to the rotational axis (D), and
wherein a force sensor (8) is assigned to the at least one clamping device (4),
**characterized in that** the force sensor (8) is designed for measuring a weight force or weight force component exerted upon the at least one clamping device (4) by the processing unit (3).

2. The carrier device according to claim 1, **characterized in that** the force sensor (8) is designed for at least measuring a force acting parallel to the rotational axis (D).

3. The carrier device according to claim 1 or 2, **characterized in that** the at least one clamping device (4) is exclusively supported on the base body (1) by the at least one force sensor (8).

4. The carrier device according to claim 1 or 2, **characterized in that** the at least one force sensor (8) is arranged in an upper section (6) of the at least one clamping device (4) in such a way that the processing unit (3) is exclusively supported on the at least one clamping device (4) by the force sensor (8) in a released state of the clamping element arrangement (16).

5. The carrier device according to one of claims 1 to 4, **characterized in that** the base body (1) is realized in the form of a receiving plate and arranged so as to be rotatable relative to a mounting body (2), wherein the at least one clamping device (4) is fixed on the receiving plate.

6. The carrier device according to claim 5, **characterized in that** the receiving plate has at least one cavity (5), in which the at least one clamping device (4) is arranged, wherein the upper section (6) of the clamping device (4) protrudes relative to an outer surface (7) of the receiving plate.

7. The carrier device according to claim 5 or 6, **characterized in that** at least three clamping devices (4) are arranged on the rotatable receiving plate, wherein a force sensor (8) is assigned to each of the clamping devices (4).

8. The carrier device according to claim 7, **characterized in that** the clamping devices (4) are arranged successively in the circumferential direction (U).

9. The carrier device according to one of claims 1 to 8, **characterized in that** an electric motor in the form of a rotary driving motor (11) is respectively assigned to the base body (1) and/or the at least one clamping device (4).

10. The carrier device according to claim 9, wherein a control unit (9) is provided and designed for
acquiring the force measured by the at least one force sensor (8),
determining a characteristic property of the processing unit (3) on the basis of the measured force,
determining at least one drive parameter for the at least one driving motor (11) by means of the characteristic property and
controlling and/or regulating a driving motor (11) of the base body and/or the at least one clamping device (4) on the basis of the at least one drive parameter.

11. A processing machine with a carrier device according to one of claims 1 to 10 and a processing head that is designed for processing the workpiece by means of cutting.

12. A method for operating a carrier device according to claim 10,
wherein the at least one force sensor (8) measures a force exerted upon the at least one clamping device (4) by the processing unit (3) and transmits said force to the control unit (9),
wherein the control unit (9) determines characteristic properties of the processing unit (3) on the basis of the measured force and ascertains at least one drive parameter by means of the characteristic properties, and
wherein the control unit (9) controls and/or regulates the driving motor (11) of the base body (1) and/or the at least one clamping device (4) on the basis of the at least one drive parameter.

13. The method according to claim 12, wherein the control unit (9) determines a characteristic parameter in the form of the weight of the processing unit (3) on the basis of the measured forces.

14. The method according to claim 11 or 12, wherein multiple clamping devices (4) are arranged successively in the circumferential direction (U) and a force sensor (8) is respectively assigned to each clamping device (4), wherein the processing unit (3) rests on the base body (1) by means of the clamping devices (4), and wherein the control unit (9) determines a characteristic parameter in the form of the weight distribution of the processing unit (3) on the basis of the measured forces.

## Revendications

1. Dispositif de support, destiné à une machine d'usinage par enlèvements de copeaux, pourvu d'un corps de base (1) et d'au moins un dispositif de bridage (4) placé sur le corps de base (1), permettant de fixer une unité d'usinage (3),
l'au moins un dispositif de bridage (4) et / ou le corps de base (1) étant conçu(e) de manière rotative autour d'un axe de rotation (D) s'écoulant dans une première direction,
l'au moins un dispositif de bridage (4) comportant un ensemble (16) d'éléments de bridage qui est conçu pour s'engager au moins en partie dans l'unité d'usinage (3) dans une position de fixation, par déplacement d'éléments de bridage dans une direction s'écoulant à la perpendiculaire de l'axe de rotation (D),
à l'au moins un dispositif de bridage (4) étant associé un capteur de force (8),
**caractérisé en ce que** le capteur de force (8) est conçu pour détecter une force de pesanteur ou une composante de force de pesanteur exercée par l'unité d'usinage (3) sur l'au moins un dispositif de bridage (4) .

2. Dispositif de support selon la revendication 1, **caractérisé en ce que** le capteur de force (8) est conçu pour détecter au moins une force agissant à la parallèle de l'axe de rotation (D).

3. Dispositif de support selon la revendication 1 ou 2, **caractérisé en ce que** l'au moins un dispositif de bridage (4) s'appuie exclusivement par l'intermédiaire de l'au moins un capteur de force (8) sur le corps de base (1).

4. Dispositif de support selon la revendication 1 ou 2, **caractérisé en ce que** l'au moins un capteur de force (8) est placé dans la partie supérieure (6) de l'au moins un dispositif de bridage (4) de telle sorte que lorsque l'ensemble (16) d'éléments de bridage est desserré, l'unité d'usinage (3) s'appuie exclusivement par l'intermédiaire du capteur de force (8) sur l'au moins un dispositif de bridage (4).

5. Dispositif de support selon l'une quelconque des revendications 1 à 4, **caractérisé en ce que** le corps de base (1) est conçu sous la forme d'un plateau de réception et est placé de manière rotative par rapport à un corps de montage (2), l'au moins un dispositif de bridage (4) étant fixé sur le plateau de réception.

6. Dispositif de support selon la revendication 5, **caractérisé en ce que** le plateau de réception comporte au moins une cavité (5) dans laquelle est placé l'au moins un dispositif de bridage (4), la partie supérieure (6) du dispositif de bridage (4) débordant par rapport à une surface extérieure (7) du plateau de réception.

7. Dispositif de support selon la revendication 5 ou 6, **caractérisé en ce qu'**au moins trois dispositifs de bridage (4) sont placés sur le plateau de réception rotatif, à chacun des dispositifs de bridage (4) étant associé un capteur de force (8).

8. Dispositif de support selon la revendication 7, **caractérisé en ce que** les dispositifs de bridage (4) sont placés les uns derrière les autres dans la direction circonférentielle (U).

9. Dispositif de support selon l'une quelconque des revendications 1 à 8, **caractérisé en ce qu'**au corps de base (1) et / ou à l'au moins un dispositif de bridage (4) est associé chaque fois un moteur électrique en tant que moteur d'entraînement rotatif (11).

10. Dispositif de support selon la revendication 9, une unité de commande (9) étant prévue, qui est configurée pour
détecter la force déterminée par l'au moins un capteur de force (8),
sur la base de la force déterminée, déterminer au moins une propriété caractéristique de l'unité d'usinage (3)
et à l'aide de la propriété caractéristique, définir au moins un paramètre d'entraînement pour l'au moins un moteur d'entraînement (11)
et sur la base de l'au moins un paramètre d'entraînement, commander et / ou régler l'un moteur d'entraînement (11) du corps de base et / ou de l'au moins un dispositif de bridage (4).

11. Machine d'usinage, pourvue d'un dispositif de support selon l'une quelconque des revendications 1 à 10 et d'une tête d'usinage qui est conçue pour usiner la pièce d'œuvre par enlèvement de copeaux.

12. Procédé opérationnel d'un dispositif de support selon la revendication 10,
l'au moins un capteur de force (8) détectant une force exercée par l'unité d'usinage (3) sur l'au moins un dispositif de bridage (4) et la transmettant à l'unité de commande (9),
sur la base de la force détectée, l'unité de commande (9) déterminant des propriétés caractéristiques de l'unité d'usinage (3) et à l'aide des propriétés caractéristiques, définissant au moins un paramètre d'entraînement et
sur la base de l'au moins un paramètre d'entraînement, l'unité de commande (9) commandant et / ou réglant le moteur d'entraînement (11) du corps de base (1) et / ou de l'au moins un dispositif de bridage (4).

13. Procédé selon la revendication 12, sur la base des forces détectées, l'unité de commande (9) déterminant en tant que grandeur caractéristique le poids de l'unité d'usinage (3).

14. Procédé selon la revendication 11 ou 12, plusieurs dispositifs de bridage (4) étant placés les uns derrière les autres dans la direction circonférentielle (U) et à chaque dispositif de bridage (4) étant chaque fois associé un capteur de force (8), l'unité d'usinage (3) reposant sur le corps de base (1) par l'intermédiaire des dispositifs de bridage (4) et l'unité de commande (9) déterminant sur la base des forces détectée la répartition du poids de l'unité d'usinage (3) en tant que grandeur caractéristique.
